# EUROPÄISCHE PATENTSCHRIFT

(11) **EP 0 370 278 B1**
(45) Veröffentlichungstag und Bekanntmachung des Hinweises auf die Patenterteilung: **04.01.1995**
(21) Anmeldenummer: 89120232.7
(22) Anmeldetag: 01.11.1989
(51) Int. Cl.: G06K 7/08, G06K 19/077

(54) **Verfahren zur Aktivierung von Leseeinrichtungen von Chipkarten und Vorrichtung zur Durchführung des Verfahrens**
Method for activating chipcard reading apparatuses, and device for carrying out the method
Méthode pour activer des appareils de lecture de cartes à puce et dispositif pour réaliser la méthode

(30) Priorität: 02.11.1988 DE 3837113
(43) Veröffentlichungstag der Anmeldung: 30.05.1990
(73) Patentinhaber: DAIMLER-BENZ AKTIENGESELLSCHAFT, 70327 Stuttgart (DE)
(72) Erfinder: Schuler, Rolf, Dipl.-Ing., D-7991 Oberteuringen (DE); Voigt, Burkhard, Dipl.-Ing., D-7997 Immenstaad (DE); Voss, Wolfgang, Dipl.-Ing., D-7997 Immenstaad (DE)

(56) Entgegenhaltungen:
- DE-A- 3 637 320
- PATENT ABSTRACTS OF JAPAN vol. 13, no. 54 (P-824)8. Februar 1989
- ELECTRONICS. Bd. 48, Nr. 14, 10. Juli 1975, NEW YORK US Seiten 100 - 105 P.E. WIGEN 'Wiegand wire: new material for magnetic-based devices'

## Beschreibung

Die Erfindung betrifft ein Verfahren zur Aktivierung elektrischer oder elektronischer Komponenten in Einrichtungen mit Chipkartenlesevorrichtung, beispielsweise solchen von Schließsystemen.

Außerdem bezieht sich die Erfindung auf entsprechende Chipkarten und Lesevorrichtungen.

Die Verwendung intelligenter Chipkarten findet in verschiedenen industriellen Bereichen zunehmende Verbreitung. So sollen in Kraftfahrzeugen der nahen Zukunft Schließsysteme mit elektronischen Komponenten verwendet werden. Dabei ist zwischen der festmontierten Schließanlage und der als beweglicher Schlüssel dienenden Chipkarte eine induktive Kopplung zur Datenübertragung vorgesehen. Geht man von passiven Chipkarten aus, d.h. von Chipkarten, welche keinerlei Taste od.dgl. besitzen, um die Datenübertragung zum Fahrzeug zu starten, so ergibt sich das Problem, wie von der Fahrzeugelektronik registriert werden kann, daß eine Chipkarte an die Lesevorrichtung herangeführt wird. Eine ständig aktivierte Lesevorrichtung ist aufgrund des ständigen Stromverbrauches unzweckmäßig, da dadurch die Fahrzeugbatterie entladen werden kann.

Aus der Druckschrift "ELECTRONICS", Bd. 48, Nr. 14, 10. Juli 1975, New York (USA), Seiten 100 bis 105, sind sogenannte Wiegand-Drähte bekannt. Dabei handelt es sich um Drähte mit permanent magnetierbaren Kern- und Mantelbereichen, wobei die Koerzitivfeldstärken für den Kernbereich und den Mantelbereich unterschiedlich sind. Damit wird die Möglichkeit geboten, den Wiegand-Draht durch Beaufschlagung mit magnetischen Feldern, deren Stärke unterhalb der Koerzitivfeldstärke des magnetisch härteren Kernbereiches liegt, zwischen zwei stabilen magnetischen Zuständen umzuschalten. Im einen Falle sind Mantel- und Kernbereich gleichgerichtet magnetisiert; im anderen Zustand sind Kern- und Mantelbereich in unterschiedlichen Richtungen magnetisiert.

Wenn der Wiegand-Draht gemäß einer in der vorgenannten Druckschrift beschriebenen Anordnung (Fig. 9 auf Seite 104) an einer Vorrichtung vorbeibewegt wird, die im wesentlichen aus zwei entgegengesetzt zueinander polarisierten Permanentmagneten sowie einer dazwischen angeordneten Spule besteht, so wird der Wiegand-Draht am einen Permanentmagneten in seinen einen Zustand und am anderen Permanentmagneten in seinen anderen Zustand geschaltet, so daß in der Spule unterschiedliche elektrische Spannungen induziert werden, je nachdem, ob der Wiegand-Draht auf seiner Bewegungsbahn vor Erreichen der Spule über den einen oder anderen Permanentmagneten hinwegbewegt wurde.

Im übrigen geht aus der vorgenannten Druckschrift hervor, daß kartenförmige Informationsträger mit einer Vielzahl von Wiegand-Drähten herstellbar sind, die jeweils entweder ihren einen oder ihren anderen magnetisch stabilen Zustand einnehmen und damit eine binär codierte Information darstellen, welche mit Lesevorrichtungen ohne eigene Energieversorgung auswertbar ist.

Aufgabe der Erfindung ist es nun, ein Verfahren zur Aktivierung einer vorwiegend passiven Einrichtung mit Chipkartenlesevorrichtung sowie entsprechende Chipkarten und Lesevorrichtungen zu schaffen.

Diese Aufgabe wird erfindungsgemäß dadurch gelöst, daß eine mit wenigstens einem magnetisch bistabilen Wiegand-Draht bestückte Chipkarte an einer von zwei entgegengesetzt gepolten Permanentmagneten eingeschlossenen Sensorspule der Chipkartenlesevorrichtung vorbeibewegt und in der Sensorspule eine elektrische Spannung induziert wird, welche die Chipkartenlesevorrichtung aktiviert.

Erfindungsgemäß ist also vorgesehen, daß die Chipkarte wenigstens einen magnetisch bistabilen Wiegand-Draht und die Lesevorrichtung an einer von der Chipkarte mit dem Wiegand-Draht zu durchlaufenden Bewegungsbahn zwei entgegengesetzt gepolte Permanentmagneten sowie dazwischen eine Sensorspule aufweist, in der beim Vorbeiführen der Chipkarte mit dem Wiegand-Draht eine die Lesevorrichtung aktivierende elektrische Spannung induziert wird.

Damit ist gewährleistet, daß die Lesevorrichtung nur zum Zusammenwirken mit der Chipkarte aktiv wird und im übrigen passiv bleiben kann.

Im Falle eines Schließsystemes eines Fahrzeuges wird also die Datenübertragung zwischen Fahrzeug und Chipkarte erst dann gestartet, wenn in der Sensorspule durch den Wiegand-Draht der Chipkarte eine Spannung induziert worden ist.

Vorteilhaft ist dabei, daß die Geschwindigkeit, mit der die Karte an den Permanentmagneten sowie der Sensorspule vorbeigeführt wird, für die Erzeugung des Spannungsimpulses unerheblich ist. Dementsprechend genügt eine langsame Bewegung der Chipkarte, wodurch sich die Karte genügend lange zum Datenaustausch mit dem Fahrzeug über einer Koppelspule der Fahrzeugelektronik befinden kann.

Besonders vorteilhaft sind die Verwendung bzw. Anordnung eines Leseschlitzes an der Lesevorrichtung bzw. im Fahrzeugschließsystem. Damit ist die Position der Chipkarte während der Datenübertragung definiert.

Der Wiegand-Draht ist dabei so auf der Chipkarte positioniert, daß zunächst die Elektronik aktiviert und dann die Koppelspulen von Chipkarte und Fahrzeugelektronik zum Datenaustausch direkt einander zugeordnet sind.

Nachfolgend wird die Erfindung anhand der Figuren näher erläutert.

Es zeigen:
- Fig. 1: eine schematische Darstellung von induktiver Kopplung und Wiegand-Sensor im Schnitt
- Fig. 2: eine schematische Darstellung von induktiver Kopplung mit Leseschlitz und Wiegand-Sensor im Schnitt
- Fig. 3: eine Chipkarte in prinzipieller Darstellung.

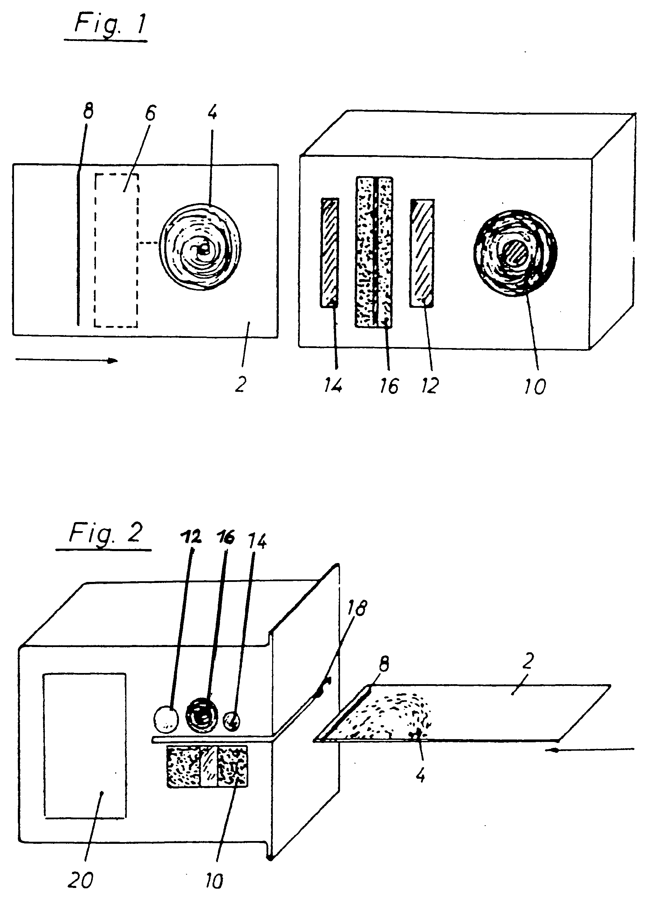

In Figur 1 ist eine Chipkarte 2 dargestellt, auf der sich eine Koppelspule 4 befindet, über die Daten mit Hilfe eines hier nicht gezeigten Mikroprozessors aus einem Speicher 6 auf der Karte 2 induktiv übertragen werden. Zur Datenübertragung können auch mehrere Koppelspulen 4 vorgesehen sein, ebenso sind mehrere Speicher 6 auf der Karte 2 möglich. Auf der Karte 2 aufgebracht oder in der Karte 2 befindet sich ein Wiegand-Draht 8, der hier senkrecht zur Bewegungsrichtung angeordnet ist. Ebenfalls denkbar ist die Möglichkeit, zwei Wiegand-Drähte 8 vorzusehen, die beiderseits der Koppelspule(n) 4 angeordnet sind. Im feststehenden Teil des Schließsystems ist eine zweite Koppelspule 10 angeordnet, die zur Datenübertragung mit der ersten Koppelspule 4 korrespondiert. Neben der Koppelspule 10 sind zwei entgegengesetzt gepolte Permanentmagneten 12 und 14 vorgesehen, die eine Sensorspule 16 einschliessen. Der Abstand zwischen WiegandDraht 8 und Koppelspule 4 auf der Karte 2 ist auf den Abstand zwischen Koppelspule 10 und Sensorspule 16 abgestimmt. Nach dem erfolgten Aktivieren wird die Datenübertragung durch die hier nicht gezeigte Elektronik vorgenommen.

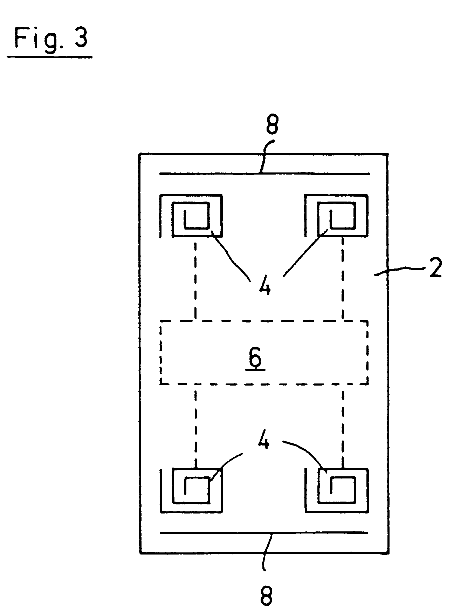

Die Figur 2 zeigt die Verwendung von erfinderischem Verfahren und Vorrichtung unter Verwendung eines Leseschlitzes 18. Die Chipkarte 2 wird in den Leseschlitz 18 eingeführt und dabei passiert der auf oder in der Karte 2 vorgesehene Wiegand-Draht die Permanentmagneten 12 und 14 und die Sensorspule 16. Nach der Aktivierung der Fahrzeugelektronik 20 wird die Datenübertragung zwischen Koppelspule 4 auf der Karte 2 und der Koppelspule 10 vorgenommen. Bei der Verwendung eines Leseschlitzes kann aufgrund der geringen Tiefe des Leseschlitzes ein robustes und zuverlässiges System erreicht werden, bei dem keine mechanisch bewegten Teile vorhanden sind und von dem Probleme mit Umwelteinflüssen wie Wasser, Frost und Schmutz kaum zu erwarten sind.

Denkbar ist auch die Verwendung einer Vorrichtung mit einem Leseschlitz, durch den die Karte hindurchgezogen wird. Dabei muss gewährleistet sein, dass die Koppelspulen von Karte und Leseeinrichtung zur Datenübertragung für einen ausreichend langen Zeitraum einander zugeordnet sind.

In Figur 3 ist eine Chipkarte 2 dargestellt, die an jedem Ende Wiegand-Drähte 8 und Koppelspulen 4 aufweist, damit die Karte ungeachtet ihrer Lage vom Benutzer in den Leseschlitz geführt und so auch bei Dunkelheit problemlos gehandhabt werden kann.

## Patentansprüche

1. Verfahren zur Aktivierung elektrischer oder elektronischer Komponenten in Einrichtungen mit Chipkartenlesevorrichtung, z.B. solchen von Schließsystemen,
**dadurch gekennzeichnet**,
daß eine mit wenigstens einem magnetisch bistabilen Wiegand-Draht (8) bestückte Chipkarte (2) an einer von zwei entgegengesetzt gepolten Permanentmagneten (12,14) eingeschlossenen Sensorspule (16) der Chipkartenlesevorrichtung vorbeibewegt und in der Sensorspule (16) eine elektrische Spannung induziert wird, welche die Lesevorrichtung aktiviert.

2. Verfahren nach Anspruch 1,
**dadurch gekennzeichnet**,
daß die Chipkarte (2) in einen Schlitz (18) eingeschoben wird.

3. Verfahren nach Anspruch 1,
**dadurch gekennzeichnet**,
daß die Chipkarte (2) durch einen Schlitz (18) hindurchgezogen wird.

4. Chipkarte und zugehörige Lesevorrichtung, insbesondere für Schließsysteme mit Betätigung durch Chipkarten,
**dadurch gekennzeichnet**,
daß die Chipkarte (2) wenigstens einen magnetisch bistabilen Wiegand-Draht (8) und die Lesevorrichtung an einer von der Chipkarte (2) mit dem Wiegand-Draht (8) zu durchlaufenden Bewegungsbahn zwei entgegengesetzt gepolte Permanentmagneten (12,14) sowie dazwischen eine Sensorspule (16) aufweist, in der bei Vorbeiführung des Wiegand-Drahtes (8) der Chipkarte (2) eine die Lesevorrichtung aktivierende elektrische Spannung induziert wird.

5. Chipkarte und zugehörige Lesevorrichtung nach Anspruch 4,
**dadurch gekennzeichnet**,
daß die Permanentmagneten (12,14) und die Sensorspule (16) an einem Schlitz (18) zur Durchführung der Chipkarte (2) angeordnet sind.

6. Chipkarte und zugehörige Lesevorrichtung nach Anspruch 4 oder 5,
**dadurch gekennzeichnet**,
daß auf der Chipkarte (2) zwei Wiegand-Drähte (8) vorgesehen sind, die wenigstens eine Koppelspule (4) zum Datenaustausch mit der Lesevorrichtung einschließen.

## Claims

1. Process for activating electrical or electronic components in devices with a device for reading chip-cards, such as those of locking-systems for example,
**wherein**
a chip-card fitted with at least one magnetic, two-state Wiegand-wire (8) passes a sensor coil enclosed by two oppositely poled permanent magnets (12, 14) of a device for reading chip-cards and an electrical tension, which activates a said reading device, is induced into a sensor coil (16).

2. Process in accordance with claim 1,
**wherein**
a chip-card (2) is inserted into a slot (18).

3. Process in accordance with claim 1,
**wherein**
a chip-card (2) is pulled through a slot (18).

4. Chip-card and associated reading device, for locking-systems operated by means of chip-cards, in particular,
**wherein**
a chip-card (2) has at least a magnetic, two-state Wiegand-wire (8) and a reading device has two oppositely poled permanent magnets (12, 14) and a sensor coil between said magnets (12, 14) on a slot-path, with a said Wiegand-wire (8), to be passed through by a said chip-card (2), an electrical tension being induced into a said sensor coil (16) when a said chip-card (2) passes a said Wiegand-wire (8).

5. Chip-card and associated reading device in accordance with claim 4,
**wherein**
permanent magnets (12, 14) and a sensor coil (16) are disposed on a slot (18) to be passed through by a said chip-card (2).

6. Chip-card and associated reading device in accordance with either claim 4 or claim 5,
**wherein**
two Wiegand-wires, which enclose at least one coupling coil (4) for exchanging data with a said reading device, are provided on a said chip-card (2).

## Revendications

1. Procédé pour activer des composants électriques ou électroniques dans des dispositifs comportant un appareil de lecture de cartes à puce, par exemple ceux de systèmes de fermeture, caractérisé en ce qu'une carte à puce (2) munie au moins d'un fil de Wiegand (8) magnétique bistable est déplacée devant une bobine de capteur (16) de l'appareil de lecture de cartes à puce entourée de deux aimants permanents (12, 14) polarisés de façon opposée, et en ce que dans une bobine de capteur (16) est induite une tension électrique qui active l'appareil de lecture.

2. Procédé suivant la revendication 1, caractérisé en ce que la carte à puce (2) est poussée dans une fente (18).

3. Procédé suivant le revendication 1, caractérisé en ce que la carte à puce (2) est glissée dans une fente (18).

4. Carte à puce et appareil de lecture associé, notamment pour des système de fermeture actionnés par des cartes à puces, caractérisés en ce que la carte à puce (2) comporte au moins un fil de Wiegand (8) magnétique bistable et que l'appareil de lecture comporte, sur une voie de déplacement empruntée par la carte à puce (2) comportant le fil de Wiegand (8), deux aimants permanents (12,14) polarisés de manière opposée, ainsi qu'une bobine de capteur (16) placée entre les deux, dans laquelle, lors du passage du fil de Wiegand (8) de la carte à puce (2) est induite une tension électrique activant l'appareil de lecture.

5. Carte à puce et appareil de lecture associé suivant la revendication 4, caractérisés en ce que les aimants permanents (12,14) et la bobine de capteur (16) sont disposées sur une fente pour passer la carte (2).

6. Carte à puce et appareil de lecture associé suivant les revendications 4 ou 5, caractérisés en ce que sur la carte à puce (2) sont prévus deux fils de Wiegand (8) qui entourent au moins une bobine de couplage (4) pour l'échange de données avec l'appareil de lecture.
